# FASCICULE DE BREVET EUROPEEN

(11) **EP 3 095 706 B1**
(45) Date de publication et mention de la délivrance du brevet: **18.04.2018**
(21) Numéro de dépôt: 16170227.9
(22) Date de dépôt: 18.05.2016
(51) Int. Cl.: B64D 29/08, B64C 7/02, B64D 27/26, B64D 29/06

(54) **NACELLE D'AERONEF COMPORTANT AU MOINS UN CAPOT MONTE ROTATIF AUTOUR DE L'AXE LONGITUDINAL DE LA NACELLE**
LUFTFAHRZEUGGONDEL, DIE MINDESTENS EINE UM DIE LÄNGSACHSE DER GONDEL DREHBAR MONTIERTE VERKLEIDUNG UMFASST
AIRCRAFT NACELLE COMPRISING AT LEAST ONE COVER MOUNTED ROTATABLY ABOUT THE LONGITUDINAL AXIS OF THE NACELLE

(30) Priorité: 21.05.2015 FR 1554557
(43) Date de publication de la demande: 23.11.2016
(73) Titulaire: Airbus Operations, 31060 Toulouse Cédex 9 (FR)
(72) Inventeur: PAUTIS, Olivier, 31330 MERVILLE (FR); COLMAGRO, Jérôme, 31500 TOULOUSE (FR)
(74) Mandataire: Le Guen-Maillet

(56) Documents cités:
- FR-A1- 2 890 378
- FR-A1- 2 933 071
- FR-A1- 3 005 453
- US-A1- 2009 272 842

## Description

### DOMAINE TECHNIQUE

La présente invention concerne une nacelle d'aéronef comportant deux capots montés rotatifs autour d'un axe parallèle à l'axe longitudinal de la nacelle, ainsi qu'un aéronef comportant au moins une telle nacelle.

### ETAT DE LA TECHNIQUE ANTERIEURE

Un aéronef comporte au moins une nacelle dans laquelle est logé un moteur, par exemple du type turboréacteur, et qui est suspendue à un mât fixé sous une aile de l'aéronef.

Conventionnellement, une nacelle pour un turboréacteur est structurée en trois zones fonctionnelles : la zone de l'entrée d'air à l'avant, en amont du flux aérodynamique, la zone des capots de soufflante en partie centrale, qui recouvrent le carter de la soufflante du moteur, et la zone du système d'inversion de poussée, qui recouvre le corps de turbine du turboréacteur en partie arrière, à l'aval du flux aérodynamique. La zone des capots de soufflante de la nacelle comporte deux capots (fan cowl en Anglais) disposés de part et d'autre du mât et qui peuvent être ouverts pour permettre d'assurer la maintenance du moteur.

Chaque capot est articulé sur des charnières autour d'un axe d'ouverture parallèle à l'axe longitudinal de la nacelle et disposé en partie haute du capot.

Chaque capot est ainsi mobile entre une position fermée dans laquelle le capot est disposé dans le prolongement de la surface extérieure de la nacelle de manière à recouvrir le carter de la soufflante et une position ouverte, dans laquelle un opérateur peut accéder au moteur.

Les bords inférieurs des capots, qui sont situés en partie basse de la nacelle, sont sensiblement jointifs en position fermée et sont maintenus dans cette position fermée par un système de verrouillage qui maintient les deux capots solidaires.

Actuellement, les dimensions de la nacelle ont tendance à augmenter, ce qui implique également une augmentation des dimensions des capots. Or, lorsque les capots sont en position ouverte, il est nécessaire de conserver une distance de sécurité entre les capots et la voilure de l'aile sous laquelle est installée la nacelle. Le maintien d'une telle distance de sécurité entraîne une limitation dans l'ouverture des capots et donc une accessibilité réduite pour l'opérateur.

De plus, l'augmentation du diamètre des nacelles tend à réduire l'espace entre le bas des nacelles et le sol. L'accès au système de verrouillage des capots par les opérateurs est alors difficile.

En outre, l'augmentation des dimensions des capots a des répercussions sur leurs tolérances de fabrication, leurs déformations en vol ou encore sur la nécessité de renforcer les charnières.

Le document FR 3005453 divulgue une nacelle qui comporte un ensemble de capotage formé de quatre capots.

Le document FR 2890378 divulgue une nacelle avec un capot coulissante autour de l'axe longitudinal.

### EXPOSE DE L'INVENTION

Un objet de la présente invention est de proposer une nacelle d'aéronef qui ne présente pas les inconvénients de l'art antérieur et qui en particulier présente un capot monté rotatif autour de l'axe longitudinal de la nacelle et des capots de dimensions réduites.

A cet effet, est proposée une nacelle présentant un axe longitudinal X et comportant:
- un châssis,
- deux capots articulés, chacun étant monté mobile en rotation en partie haute du châssis autour d'un axe d'ouverture parallèle à l'axe longitudinal X entre une position fermée et une position ouverte,
- un capot coulissant qui, en position fermée, se place entre les bords libres des capots articulés, et
- des moyens de coulissement arrangés pour assurer, en position ouverte, un déplacement en rotation autour de l'axe longitudinal X du capot coulissant.

Une telle nacelle présente donc des capots dont l'encombrement en position d'ouverture est réduit et dont les dimensions sont réduites par rapport aux capots de l'état de la technique.

Avantageusement, les moyens de coulissement sont deux systèmes à glissière circulaire solidaires du châssis et dont l'un est disposé au niveau de la partie avant du capot coulissant et dont l'autre est disposé au niveau de la partie arrière du capot coulissant.

Avantageusement, chaque système à glissière circulaire présente une rainure en C solidaire du châssis et un ou plusieurs plots solidaires du capot coulissant et mobiles dans la rainure.

Avantageusement, la nacelle comporte en outre, pour chaque capot articulé, un système de verrouillage prévu entre le capot coulissant et ledit capot articulé au niveau des bords libres des capots pour assurer le verrouillage en position fermée du capot coulissant et du capot articulé entre eux.

Avantageusement, la nacelle comporte :
- une zone d'entrée d'air à l'avant, en amont du flux aérodynamique,
- une zone du système d'inversion de poussée, à l'arrière, à l'aval du flux aérodynamique,
- une zone centrale de capots de soufflante, située entre ladite zone d'entrée d'air et ladite zone du système d'inversion de poussée,
lesdits deux capots articulés et ledit capot coulissant étant situés dans ladite zone centrale de capots de soufflante.

L'invention propose également un aéronef comportant un mât sous lequel est fixée une nacelle selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de côté d'un aéronef présentant une nacelle selon l'invention,
la Fig. 2 montre en perspective la nacelle selon l'invention en position ouverte, et
la Fig. 3 montre une vue en coupe de la nacelle de la Fig. 2 par un plan perpendiculaire à l'axe longitudinal de la nacelle.

### EXPOSE DETAILLE DE MODES DE REALISATION

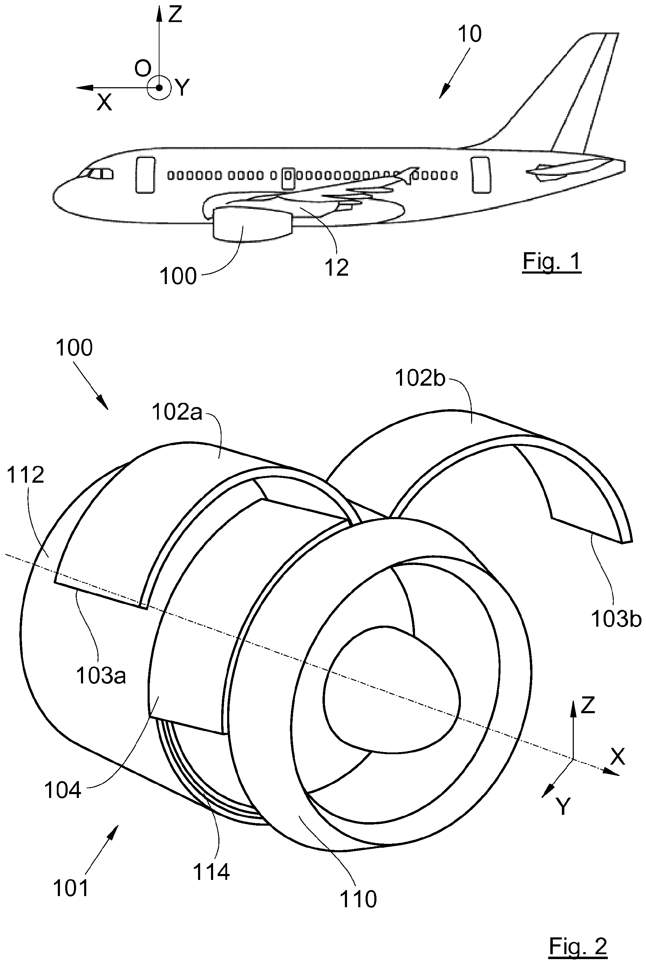

La Fig. 1 montre un aéronef 10 qui comporte classiquement au moins deux nacelles 100 dont une seule est vue sur la Fig. 1 et qui est de forme sensiblement cylindrique. Chaque nacelle 100 est fixée sous un mât 12 dudit aéronef 10.

Dans la description qui suit, et par convention, on appelle X l'axe longitudinal de l'aéronef 10 orienté positivement dans le sens d'avancement de l'aéronef 10 et qui est également l'axe longitudinal de la nacelle 100, on appelle Y l'axe transversal de l'aéronef qui est horizontal lorsque l'aéronef est au sol, et Z l'axe vertical ou hauteur verticale lorsque l'aéronef est au sol, ces trois directions X, Y et Z étant orthogonales entre elles et formant un repère orthonormé ayant pour origine le point O. Les termes relatifs à une position sont pris en référence à un aéronef 10 en position d'utilisation normale d'avancement tel que représenté sur la Fig. 1.

La Fig. 2 montre la nacelle 100 qui comporte un châssis 101 qui est fixé au mât 12 et qui supporte le moteur. La nacelle 100 présente trois zones fonctionnelles : une zone d'entrée d'air 110 à l'avant, en amont du flux aérodynamique traversant le moteur, une zone des capots de soufflante en partie centrale et une zone du système d'inversion de poussée 112 qui recouvre le corps de turbine du turboréacteur en partie arrière, à l'aval du flux aérodynamique.

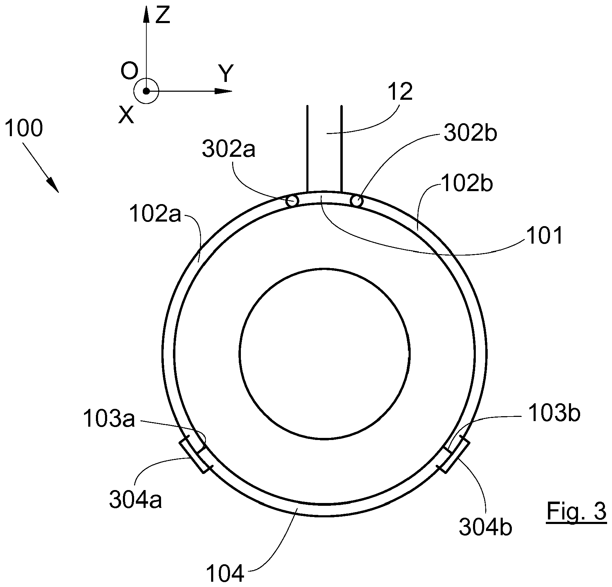

Dans la zone centrale des capots de soufflantes, la nacelle 100 comporte des capots qui recouvrent le carter de la soufflante du moteur. Plus précisément, elle comporte deux capots articulés 102a et 102b, chacun étant monté mobile en rotation sur le châssis 101 par l'intermédiaire de charnières (302a-b, Fig. 3) autour d'un axe d'ouverture parallèle à l'axe longitudinal X de la nacelle 100 et disposé en partie haute du châssis 101. Les deux capots articulés 102a-b et les deux axes d'ouverture sont disposés de part et d'autre du mât 12. Les deux capots articulés 102a-b sont arrangés entre la zone d'entrée d'air 110 et la zone du système d'inversion de poussée 112.

Chaque capot articulé 102a-b est ainsi mobile entre une position fermée (Fig. 3) dans laquelle le capot articulé 102a-b est disposé dans le prolongement de la surface extérieure de la nacelle 100, ici l'enveloppe de la zone d'entrée d'air 110 et de la zone du système d'inversion de poussée 112, de manière à recouvrir le carter de la soufflante et une position ouverte (Fig. 2), dans laquelle le capot articulé 102a-b est écarté du châssis 101 et dans laquelle un opérateur peut accéder à l'intérieur de la nacelle 100.

La nacelle 100 présente également un capot coulissant 104 également arrangé entre la zone d'entrée d'air 110 et la zone du système d'inversion de poussée 112, dans le prolongement de la surface extérieure de la nacelle 100. Le capot coulissant 104 est mobile en rotation sur le châssis 101 autour de l'axe longitudinal X. A cette fin, la nacelle 100 présente des moyens de coulissement qui sont arrangés pour assurer un déplacement en rotation autour de l'axe longitudinal X du capot coulissant 104 sur la périphérie de la nacelle 100 entre le flanc arrière de la zone d'entrée d'air 110 et le flanc avant de la zone du système d'inversion de poussée 112 lorsque les capots articulés 102a-b sont en position ouverte. L'étendue angulaire des moyens de coulissement détermine l'amplitude du déplacement du capot coulissant 104.

La Fig. 3 montre la nacelle 100 lorsque les capots 102a-b et 104 sont en position fermée. Les deux capots articulés 102a-b se referment alors sur le châssis 101 et le capot coulissant 104 se positionne entre les bords libres 103a-b des capots articulés 102a-b, c'est-à-dire ici en partie basse de la nacelle 100. L'étendue angulaire de chaque capot 102a-b, 104 est telle qu'en position fermée, les capots 102a-b et 104 sont jointifs et recouvrent entièrement le châssis 101. Le bord libre 103a-b est le bord qui s'écarte en position ouverte et qui est sur le bord opposé au bord portant la charnière 302a-b.

Pour passer en position ouverte, les deux capots articulés 102a-b sont relevés et écartés du châssis 101 par rotation autour des charnières 302a-b et le capot coulissant 104 peut alors se déplacer librement autour du châssis 101 d'un côté ou de l'autre de la nacelle 100. Dans le mode de réalisation de l'invention présenté sur la Fig. 2, le capot coulissant 104 a été déplacé sur le côté tribord de la nacelle 100, mais elle peut de la même façon se déplacer sur le côté bâbord.

Ainsi, la nacelle 100 présente trois capots 102a-b et 104 mobiles dont les dimensions sont réduites par rapport à ceux de l'état de la technique ce qui permet de compenser les effets d'agrandissement de la nacelle 100. Ainsi, ces capots permettent une meilleure accessibilité à l'intérieur de la nacelle 100, et une fabrication plus aisée. De plus, ces panneaux de dimensions réduites permettent de limiter les déformations en vol, qui génèrent des phénomènes d'écopage. Ils permettent ainsi de réduire la trainée et donc la consommation globale de l'avion

Les moyens de coulissement prennent la forme de deux systèmes à glissière circulaire 114 solidaires du châssis 101 et dont l'un est disposé au niveau de la partie avant du capot coulissant 104 et dont l'autre est disposé au niveau de la partie arrière du capot coulissant 104. Selon un mode de réalisation particulier, chaque système à glissière circulaire 114 présente par exemple une rainure en C, ou en queue d'aronde, solidaire du châssis 101 et un ou plusieurs plots solidaires du capot coulissant 104 et mobiles dans la rainure. L'homme du métier pourra cependant imaginer sans difficultés d'autres moyens de coulissement.

Pour assurer le maintien en position fermée des capots 102a-b et 104, et donc le verrouillage en position fermée du capot coulissant 104 et de chacun des capots articulés 102a-b entre eux, la nacelle 100 comporte pour chaque capot articulé 102a-b, un système de verrouillage 304a-b prévu entre le capot coulissant 104 et ledit capot articulé 102a-b au niveau des bords libres 103a-b des capots 102a-b et 104. Chaque système de verrouillage 304a-b est représenté symboliquement sur la Fig. 3 et il peut prendre la forme de tout système de verrouillage connu.

Du fait de l'étendue angulaire du capot coulissant 104, chaque système de verrouillage 304a-b est plus facilement accessible que dans le cas de l'état de la technique. En effet, chaque système de verrouillage 304a-b se trouve sur le côté de la nacelle 100 et non sous la nacelle.

Comme le montre la Fig. 2, le capot coulissant 104 peut se déplacer jusqu'au voisinage des charnières 302a-b des capots articulés 102a-b.

L'arrangement particulier décrit ci-dessus permet également l'ouverture d'un capot articulé 102a-b indépendamment de l'ouverture de l'autre capot articulé 102b-a.

## Revendications

1. Nacelle (100) présentant un axe longitudinal X et comportant:
- un châssis (101),
- deux capots articulés (102a-b), chacun étant monté mobile en rotation en partie haute du châssis (101) autour d'un axe d'ouverture parallèle à l'axe longitudinal X entre une position fermée et une position ouverte, **caractérisée en ce qu'**elle comporte en plus
- un capot coulissant (104) qui, en position fermée, se place entre les bords libres (103a-b) des capots articulés (102a-b), et
- des moyens de coulissement arrangés pour assurer, en position ouverte, un déplacement en rotation autour de l'axe longitudinal X du capot coulissant (104).

2. Nacelle (100) selon la revendication 1, **caractérisée en ce que** les moyens de coulissement sont deux systèmes à glissière circulaire (114) solidaires du châssis (101) et dont l'un est disposé au niveau de la partie avant du capot coulissant (104) et dont l'autre est disposé au niveau de la partie arrière du capot coulissant (104).

3. Nacelle (100) selon la revendication 2, **caractérisée en ce que** chaque système à glissière circulaire (114) présente une rainure en C solidaire du châssis (101) et un ou plusieurs plots solidaires du capot coulissant (104) et mobiles dans la rainure.

4. Nacelle (100) selon l'une des revendications 1 à 3, **caractérisé en ce qu'**elle comporte en outre, pour chaque capot articulé (102a-b), un système de verrouillage (304a-b) prévu entre le capot coulissant (104) et ledit capot articulé (102a-b) au niveau des bords libres (103a-b) des capots (102a-b, 104) pour assurer le verrouillage en position fermée du capot coulissant (104) et du capot articulé (102a-b) entre eux.

5. Nacelle (100) selon l'une des revendications 1 à 4, **caractérisé en ce qu'**elle comporte :
- une zone d'entrée d'air (110) à l'avant, en amont du flux aérodynamique,
- une zone du système d'inversion de poussée (112), à l'arrière, à l'aval du flux aérodynamique,
- une zone centrale de capots de soufflante, située entre ladite zone d'entrée d'air (110) et ladite zone du système d'inversion de poussée (112),
lesdits deux capots articulés (102a-b) et ledit capot coulissant (104) étant situés dans ladite zone centrale de capots de soufflante.

6. Aéronef comportant un mât (12) sous lequel est fixée une nacelle (100) selon l'une des revendications précédentes.

## Patentansprüche

1. Gondel (100), die eine Längsachse X aufweist und umfassend:
- ein Gestell (101),
- zwei angelenkte Verkleidungen (102a-b), die jeweils drehbeweglich am oberen Teil des Gestells (101) um eine Öffnungsachse parallel zur Längsachse X zwischen einer geschlossenen Position und einer offenen Position montiert sind,
**dadurch gekennzeichnet, dass** sie ferner umfasst:
- eine gleitende Verkleidung (104), die sich in geschlossener Position zwischen den freien Rändern (103a-b) der angelenkten Verkleidungen (102a-b) anordnet, und
- Gleitmittel, die angeordnet sind, um in offener Position eine Drehbewegung um die Längsachse X der gleitenden Verkleidung (104) zu gewährleisten.

2. Gondel (100) nach Anspruch 1, **dadurch gekennzeichnet, dass** die Gleitmittel zwei Systeme mit kreisförmiger Gleitschiene (114) sind, die mit dem Gestell (101) verbunden sind, und von denen eines im Bereich des vorderen Teils der gleitenden Verkleidung (104) und das andere im Bereich des hinteren Teils der gleitenden Verkleidung (104) angeordnet ist.

3. Gondel (100) nach Anspruch 2, **dadurch gekennzeichnet, dass** jedes System mit kreisförmiger Gleitschiene (114) eine C-förmige Nut, die mit dem Gestell (101) verbunden ist, oder einen oder mehrere Zapfen aufweist, die mit der gleitenden Verkleidung (104) verbunden und in der Nut beweglich sind.

4. Gondel (100) nach einem der Ansprüche 1 bis 3, **dadurch gekennzeichnet, dass** sie ferner für jede angelenkte Verkleidung (102a-b) ein Verriegelungssystem (304a-b) umfasst, das zwischen der gleitenden Verkleidung (104) und der angelenkten Verkleidung (102a-b) im Bereich der freien Ränder (103a-b) der Verkleidungen (102a-b, 104) vorgesehen ist, um die Verriegelung der gleitenden Verkleidung (104) und der angelenkten Verkleidung (102a-b) untereinander in geschlossener Position zu gewährleisten.

5. Gondel (100) nach einem der Ansprüche 1 bis 4, **dadurch gekennzeichnet, dass** sie umfasst:
- eine Lufteintrittszone (110) vorne stromaufwärts zum aerodynamischen Strom,
- eine Zone des Schubumkehrsystems (112) hinten stromabwärts zum aerodynamischen Strom,
- eine zentrale Zone von Gebläseverkleidungen, die sich zwischen der Lufteintrittszone (110) und der Zone des Schubumkehrsystems (112) befindet,
wobei die zwei angelenkten Verkleidungen (102a-b) und die gleitende Verkleidung (104) in der zentralen Zone von Gebläseverkleidungen angeordnet sind.

6. Luftfahrzeug, umfassend einen Masten (12), unter dem eine Gondel (100) nach einem der vorhergehenden Ansprüche befestigt ist.

## Claims

1. Nacelle (100) having a longitudinal axis X and comprising:
- a chassis (101),
- two articulated cowls (102a-b), each being mounted rotatably in an upper portion of the chassis (101) about an opening axis parallel to the longitudinal axis X, between a closed position and an open position,
**characterized in that** it comprises also
- a sliding cowl (104) which, in the closed position, is placed between the free edges (103a-b) of the articulated cowls (102a-b), and
- sliding means arranged to ensure, in the open position, a rotation about the longitudinal axis X of the sliding cowl (104).

2. Nacelle (100) according to claim 1, **characterized in that** the sliding means are two circular sliding systems (114) which are secured to the chassis (101) and of which one is arranged at the front portion of the sliding cowl (104) and of which the other is arranged at the rear portion of the sliding cowl (104).

3. Nacelle (100) according to claim 2, **characterized in that** each circular sliding system (114) has a C-shaped groove secured to the chassis (101) and one or more pegs which are secured to the sliding cowl (104) and are free to move in the groove.

4. Nacelle (100) according to one of claims 1 to 3, **characterized in that** it further comprises, for each articulated cowl (102a-b), a locking system (304a-b) provided between the sliding cowl (104) and said articulated cowl (102a-b) at the free edges (103a-b) of the cowls (102a-b, 104) in order to lock the sliding cowl (104) and the articulated cowl (102a-b) to each other in the closed position.

5. Nacelle (100) according to one of Claims 1 to 4, **characterized in that** it comprises:
- an air intake zone (110) at the front, in the upstream direction of the aerodynamic flow,
- a thrust-reversal system zone (112) at the rear, in the downstream direction of the aerodynamic flow,
- a central zone of fan cowl doors, located between said air intake zone (110) and said thrust-reversal system zone (112),
said two articulated cowls (102a-b) and said sliding cowl (104) being located in said central zone of fan cowl doors.

6. Aircraft comprising a pylon (12) below which is attached a nacelle (100) according to one of the preceding claims.
